# EUROPEAN PATENT SPECIFICATION

(11) **EP 3 885 552 B1**
(45) Date of publication and mention of the grant of the patent: **04.06.2025**
(21) Application number: 21161757.6
(22) Date of filing: 10.03.2021
(51) Int. Cl.: F02C 3/107, F02C 7/36, F02K 3/06

(54) **GAS TURBINE ENGINE**
GASTURBINENTRIEBWERK
MOTEUR DE TURBINE À GAZ

(30) Priority: 26.03.2020 GB 202004386; 26.03.2020 GB 202004384; 26.03.2020 GB 202004382; 26.03.2020 GB 202004387; 26.03.2020 GB 202004385
(43) Date of publication of application: 29.09.2021
(73) Proprietor: Rolls-Royce plc, London N1 9FX (GB)
(72) Inventor: Stieger, Rory, Derby, Derbyshire DE24 8BJ (GB)
(74) Representative: Rolls-Royce plc

(56) References cited:
- EP-A1- 3 376 011
- EP-A1- 3 444 468
- EP-A1- 3 604 783
- EP-A1- 3 670 886
- WALSH PHILIP P ET AL: "Gas Turbine Engine Components", 1 January 1998, GAS TURBINE PERFORMANCE, BLACKWELL SCIENCE, GB, PAGE(S) 159 - 177, ISBN: 978-0-632-04874-8, XP008182806
- A DUNCAN WALKER, IAN MARIAH, DIMITRA TSAKMAKIDOU, HIREN VADHVANA, CHRIS HALL: "The Influence of Fan Root Flow on the Aerodynamic of a LowPressure Compressor Transition Duct", 22 October 2019 (2019-10-22), Retrieved from the Internet <URL:https://asmedigitalcollection.asme.org/turbomachinery/article/doi/10.1115/1.40452> [retrieved on 20240220]

## Description

The present disclosure relates to a gas turbine engine.

European patent application EP3444468A1 discloses an aircraft gas turbine engine which comprises a fan coupled to a fan drive turbine, the fan being configured to provide a bypass flow and a core flow in use. The engine includes a reduction gearbox which couples the fan to the fan drive turbine and a core compressor arrangement. The core compressor arrangement has a core inlet at an upstream end of a core gas flow passage defined by radially inner and outer walls, and at least a first compressor rotor blade provided at an upstream end of the compressor arrangement. The radially inner wall of the core inlet defines a first diameter, and a root leading edge of the first compressor rotor blade defines a second diameter. A first ratio of the first diameter to the second diameter is greater than or equal to 1.4.

European patent application EP3376011A1 discloses an aircraft gas turbine engine which includes a compressor system comprising a low pressure compressor coupled to a low pressure shaft, and a high pressure compressor coupled to a high pressure shaft. The engine includes an inner core casing provided radially inwardly of compressor blades of the compressor system, and an outer core casing arrangement provided radially outwardly of compressor blades of the compressor system, the inner core casing and outer core casing arrangement defining a core working gas flow path therebetween. The engine also includes a fan coupled to the low pressure shaft via a reduction gearbox, the outer core casing arrangement comprising a first outer core casing and a second outer core casing spaced radially outwardly from the first outer core casing. At an axial plane of an inlet to the high pressure compressor, the second outer core casing has an inner radius at least 1.4 times the inner radius of the first outer core casing.

According to a first aspect there is provided a gas turbine engine comprising a gas turbine engine core comprising high and low pressure compressors and high and low pressure turbines, the high pressure compressor and high pressure turbine being coupled by a high pressure shaft, and the low pressure compressor and low pressure turbine being coupled by a low pressure shaft, the engine further comprising a fan coupled to the low pressure shaft by a reduction gearbox, wherein the low pressure compressor comprises no more than two compressor stages, and the low and high pressure compressor together define a cruise overall pressure ratio of between 30 and 50, and wherein the engine comprises a core inlet passage extending between a core inlet and an inlet of the low pressure compressor, a first radius change ΔR₁ being defined by a difference between a radius at a mid-height of the leading edge of an engine section stator aerofoil at an axially forward end of the core inlet passage, and an outlet radius Rₒᵤₜₗₑₜ of the core inlet passage measured at a mid-height at a leading edge of a first rotor stage of the low pressure compressor, a first duct loading *ΔR₁*/*L₁* being defined by a ratio of the first radius change ΔR₁ to a first axial length L of the inlet duct between the axially forward end and the leading edge of the first stage (44a) of the low pressure compressor, wherein the first duct loading is between 0.35 and 0.55, and wherein the first compressor rotor of the low pressure compressor defines a hub to tip ratio defined by a radius of a tip of a leading edge of the compressor rotor divided by a radius of a root at the leading edge of the compressor rotor, wherein the hub to tip ratio is between 0.6 and 0.75; characterised in that the engine core comprises an inter-compressor duct extending between an outlet of the low pressure compressor and an inlet of the high pressure compressor, the inter-compressor duct defining a second duct loading ΔR₂/L₂ comprising a second radius change ΔR₂ divided by a second axial length L₂ of the inter-compressor duct, wherein the second radius change ΔR₂ can be determined by a difference between a radius R_{IPC} of the inter-compressor passage measured at a mid-height of the trailing edge of an axially rearmost low pressure compressor rotor at an axially forward end of the inter-compressor passage, and a radius R_{HPC} of the inter-compressor passage measured at a mid-height at a leading edge of a first rotor stage of the high pressure compressor, wherein the second duct loading is between 0.3 and 0.6.

It has been found by the inventors that this combination of features provides a highly efficient gas turbine engine, which has a relatively short length, and so low mass, compared to alternative configurations.

The high pressure compressor may define a cruise overall pressure ratio of between 16:1 and 27:1, and may be define a cruise overall pressure ratio of between 17:1 and 20:1. Consequently, the high pressure compressor provides for a majority of the pressure rise in the core. This contributes to the overall short length of the engine.

The high pressure compressor may have no fewer than 8 stages and no more than 12 stages, and may consist of 9 or 10 stages. The results in an engine core having a relatively high overall pressure ratio, and a relatively low stage loading, which in turn results in high thermodynamic efficiency.

The low pressure compressor may comprise a cruise pressure ratio of between approximately 1.5:1 and 2:1.

The first duct loading may be approximately 0.4.

A first compressor rotor of the low pressure compressor may define a hub to tip ratio of approximately 0.7. Advantageously, the hub to tip ratio is increased relative to alternative configurations. Consequently, the core inlet passage does not have to extend as far inwards for a given core inlet radius, thereby allowing a shorter core inlet passage for a given duct loading. Consequently, overall engine length and weight are reduced.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The present disclosure is particularly applicable to engines having fans with high hub to tip ratios, since this necessarily results in a high core inlet radius. Consequently, in combination with a fan having a high hub to tip ratio, the present invention results in a significantly shorter engine compared to conventional engines having high hub to tip ratios, thereby resulting in significant weight saving and improved packaging.

The engine core may comprise an inter-compressor duct extending between an outlet of the low pressure compressor, and an inlet of the high pressure compressor.

The inter-compressor duct may define a second duct loading ΔR₂/L₂. The second duct loading ΔR₂/L₂ may be defined by a second radius change ΔR₂ divided by a second axial length L₂ of the inter-compressor duct. The second radius change ΔR₂ may be defined by a difference between a radius R_{IPC} of the inter-compressor passage measured at a mid-height of the trailing edge of an axially rearmost low pressure compressor rotor at an axially forward end of the inter-compressor passage, and a radius R_{HPC} of the inter-compressor passage measured at a mid-height at a leading edge of a first rotor stage of the high pressure compressor. The second duct loading is between 0.3 and 0.6, may be between 0.35 and 0.55, and may be approximately 0.5. Typically, the inter-compressor duct has a higher duct loading than the core inlet passage. Consequently, although the larger radius final stage rotor of the low pressure rotor results in a larger difference in radius between the forward and rear ends of the inter-compressor duct, this can be accommodated without significantly increasing the length of the inter-compressor duct, in view of the higher duct loading that can be tolerated in this region. Consequently, overall engine length is reduced.

The engine may comprise a forward core mounting member which may extend between a radially inner core housing and a radially outer core housing.

The engine may comprise a plurality of outlet guide vanes located axially rearward of the fan. The outlet guide vanes may be configured to provide structural support for the engine core relative to a fan housing.

The forward core mounting member may extend between an axial position of the inter-compressor duct and an axial position of a root trailing edge of the outlet guide vanes. Advantageously, the relatively low number of low pressure compressor stages permits a relatively short distance between the inter-compressor duct and fan outlet guide vanes (OGVs), which in turn permits a relatively short forward core mounting member, which further reduces weight. Furthermore, this permits the forward core mounting member to subtend a relatively small angle relative to the radial direction, thereby reducing bending stress in operation, and so further reducing weight and increasing strength.

The high pressure turbine may comprise two or fewer stages.

The low pressure turbine may comprise four or fewer stages and may comprise three stages.

The gas turbine engine as described herein may have any suitable general architecture. For example, the gas turbine engine may have further shafts that connect turbines and compressors, for example three shafts.

The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

In any gas turbine engine as described herein, a combustor may be provided axially downstream of the fan and compressors. For example, the combustor may be directly downstream of (for example at the exit of) the high pressure compressor. By way of further example, the flow at the exit to the combustor may be provided to the inlet of the high pressure turbine. The combustor may be provided upstream of the turbines.

Each compressor stage may comprise a row of rotor blades and a row of stator vanes, which may be variable stator vanes (in that their angle of incidence may be variable). The row of rotor blades and the row of stator vanes may be axially offset from each other.

Similarly, each turbine may comprise any number of stages, for example multiple stages. Each stage may comprise a row of rotor blades and a row of stator vanes. The row of rotor blades and the row of stator vanes may be axially offset from each other.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall core pressure ratio of a gas turbine engine as described herein may be defined as the ratio of the stagnation pressure upstream of the low pressure compressor to the stagnation pressure at the exit of the highest pressure compressor (before entry into the combustor).

Specific thrust of an engine may be defined as the net thrust of the engine divided by the total mass flow through the engine. At cruise conditions, the specific thrust of an engine described herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described herein may have any desired maximum thrust. Purely by way of non-limitative example, a gas turbine as described herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance - between top of climb and start of descent. Cruise conditions thus define an operating point of, the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The method may comprise, at cruise conditions, operating the low and high pressure compressors to provide a pressure ratio between 30:1 and 50:1.

Embodiments will now be described by way of example only, with reference to the Figures, in which:
Figure 1 is a sectional side view of a gas turbine engine in accordance with the present disclosure;
Figure 2 is a close up sectional side view of an upstream portion of the gas turbine engine of figure 1;
Figure 3 is a partially cut-away view of a gearbox for a gas turbine engine; and
Figure 4 is a sectional side view of a gas turbine engine not in accordance with the present disclosure.

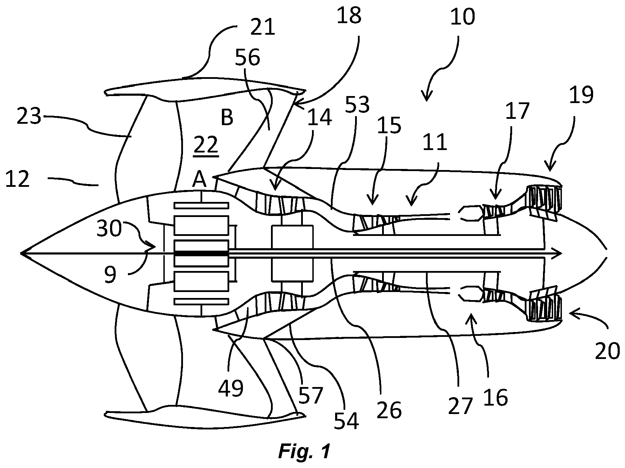

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30. A plurality of Outlet Guide Vanes (OGV) 56 are provided downstream of the fan 23, within the nacelle 21.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

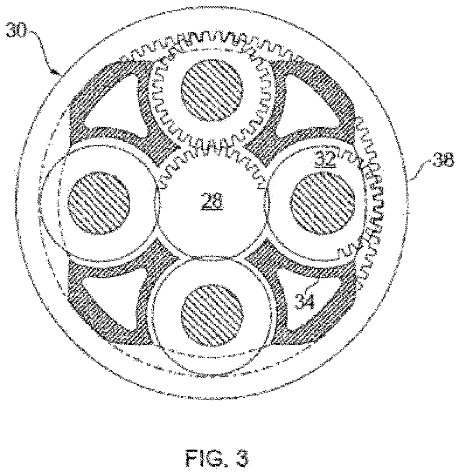

A front part of the engine 10 is shown in more detail. The low pressure turbine 19 drives the shaft 26, which is coupled to a sun wheel, or sun gear, 28 of the epicyclic gear arrangement 30, which is also shown in more detail in figure 3. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

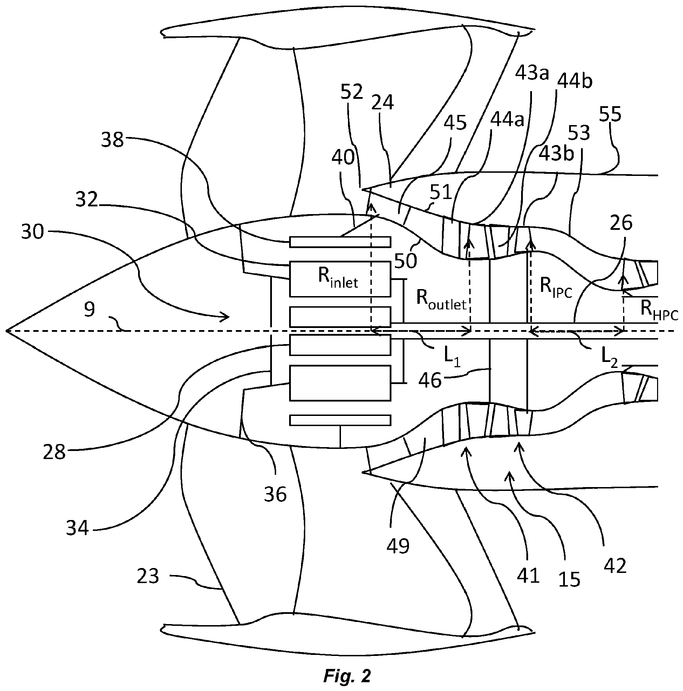

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figures 1 to 3. For example, where the gearbox 30 has a star arrangement (described above), the skilled person would readily understand that the arrangement of output and support linkages and bearing locations would typically be different to that shown by way of example in Figure 2. Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Referring once more to figures 1 and 2, each of the compressors 14, 15 comprises a multi-stage axial flow compressor.

Referring now to figure 2, the low pressure compressor 14 consists of exactly two stages 41, 42 - i.e. no more than or less than two stages. Each stage 41, 42 comprises at least one respective compressor rotor 43a, 43b, and may comprise a respective stator 44a, 44b. The respective rotor 43a, 43b and stator 44a, 44b are generally axially spaced. In the present case, the first stator 44a is upstream of the first rotor 43a. One or more further stators such as an inlet stator 45 may be provided - however, since no additional rotor is associated with the inlet stator 45, this does not constitute an additional stage, since no pressure rise is provided by the inlet stator 45 alone. As will be appreciated by the person skilled in the art, the rotors 43a, 43b are coupled to the respective shaft (i.e. the low pressure shaft 26 in the case of the low pressure compressor 14) by corresponding discs 46, and so turn with the shaft 26. On the other hand, the stators 44a, 44b are held stationary. In some cases, the stators 44a, 44b may pivot about their long axes, to adjust the angle of attack and inlet and outlet area for the respective compressor stage. Such stators are known as "variable stator vanes" or VSVs.

The high pressure compressor 15 similarly comprises either nine or ten stages, and in the described embodiment consists of ten stages. The first two stages 47, 48 are shown in figure 1, while the remainder are not shown to aid clarity.

Between them, the high and low pressure compressors 14,15 define a cruise in use overall core pressure ratio (OPR). The core OPR is defined as the ratio of the stagnation pressure upstream of the first stage 44 of the low pressure compressor 14 to the stagnation pressure at the exit of the highest pressure compressor 15 (before entry into the combustor). The core OPR excludes any pressure rise generated by the fan 23 where the fan provides air flow to the core, so a total engine overall pressure ratio (EPR) may be higher than the core OPR. In the present disclosure, the overall core OPR is between 30 and 50 at cruise conditions, as defined above. In the described embodiment, the core OPR is 40, and may take any value between these upper and low bounds. For example, the core OPR may be any of 35, 40, 45, and 50 at cruise conditions.

As will be understood, the core OPR will vary according to atmospheric, flight and engine conditions. However, the cruise OPR (i.e. the highest achievable OPR for that engine) will occur at a particular point in the flight cycle for a given engine design.

As will be understood, a large design space must be considered when designing a gas turbine engine to determine an optimal engine with respect to a chosen metric (such as engine weight, cost, thermal efficiency, propulsive efficiency, or a balance of these). In many cases, there may be a large number of feasible solutions for a given set of conditions to achieve a desired metric.

One such variable is core OPR. As core OPR increases, thermal efficiency also tends to increase, and so a high OPR is desirable. Even once a particular OPR is chosen however, a number of design variables must be chosen to meet the chosen OPR.

In choosing a core OPR, a further design variable is the amount of pressure rise provided by the low pressure compressor 14 relative to that provided by the high pressure compressor 15 (sometimes referred to as "worksplit"). As will be understood, the total core OPR can be determined by multiplying the low pressure compressor pressure ratio (i.e. the ratio between the stagnation pressure at the outlet of the low pressure compressor to the stagnation pressure at the inlet of the low pressure compressor 14 by the high pressure compressor ratio (i.e. the ratio between the stagnation pressure at the outlet of the high pressure compressor 15 to the stagnation pressure at the inlet of the high pressure compressor 15).

Consequently, a higher core OPR can be provided by increasing the high pressure compressor ratio, the low pressure compressor ratio, or both.

The inventors have found that a particularly efficient work split for a gas turbine engine having a core OPR in the above described range can be provided by providing a high pressure compressor 15 having a pressure ratio of between 17:1 and 25:1. In the present example, the high pressure compressor has a pressure ratio of approximately 20:1. It has been found to be difficult to provide a pressure ratio significantly greater than 25:1 on a compressor provided on a single shaft using current technology. Consequently, to provide the necessary core OPR, a low pressure compressor ratio of between 1.5:1 and 2:1 is required. In the present example, the low pressure compressor 14 has a pressure ratio of approximately 1.7:1, giving a core OPR of 34:1.

Similarly, there are a number of ways to increase the compressor pressure ratio. A first method is to increase the stage loading. Stage loading is defined as the stagnation pressure ratio across an individual stage (rotor and stator) of a compressor. Similarly, an average stage loading can be defined as the sum of the stage loadings of each compressor stage of a compressor, divided by the number of stages. For example, in the present disclosure, the average stage loading of the low pressure compressor 14 is 1.3. This can in turn be increased by one or more of increasing the rotor speed at the cruise compression conditions, increasing the turning provided by the blades, or increasing the radius of the tips of the compressor rotors, which in turn necessitates an increase in the radius of the roots of the compressor rotors to maintain a given flow area. Each of these options has associated advantages and disadvantages. For instance, increasing low pressure compressor rotor speed necessitates either an increase in the reduction ratio of the gearbox 30, or a reduction in the fan 23 radius, in order to maintain fan tip speeds at a desired level for noise and efficiency reasons. On the other hand, increasing the compressor tip radius necessitates an increase in weight, in view of the larger compressor discs that are required. Increased turning of the airflow may result in lower surge margin, and reduced efficiency. In any case, a higher stage loading may result in a lower efficiency, since the increased rotor tip speed or higher turning leads to lower compressor efficiencies, in view of losses associated with aerodynamic shocks as the tips significantly exceed the speed of sound.

A second option is to increase the number of stages in the respective compressors, thereby maintaining a low stage loading, low rotational speed, and low disc weight. Again, this can be achieved by adding a stage to either the low pressure compressor 14 or high pressure compressor 15. However, this will generally result in a higher weight and cost associated with the additional stage.

A further complication is the presence of the gearbox 30. The gearbox provides additional design freedom, since, as noted above, the gearbox reduction ratio can be selected to provide a preferred fan tip speed independently of both fan radius and low pressure compressor rotor speed. However, the gearbox also presents constraints in view of its large size. Consequently, the large radius required radially inward of the fan 23 inherent in a geared turbofan having an epicyclic gearbox dictates a fan 23 having a large hub radius, i.e. a large radial distance between the engine centre 9 and the aerodynamic root of the fan blades 23. Furthermore, in view of the relatively slow turning fan typical of geared turbofans, relatively little pressure rise is provided by the inner radius of the fan 23, and so geared turbofans tend to have a high hub to tip ratio.

As can be seen from figure 2, a core inlet passage 49 is provided. The core inlet passage 49 is defined by radially inner 50 and outer 51 walls, which enclose the core flow A. The core inlet passage 49 defines a core inlet 52 at an axial position of a leading edge 52 of the engine section stator 45, and terminates at a leading edge of the first rotor stage 44 of the low pressure compressor.

Similarly, an inter-compressor duct 53 is provided, which is defined by the radially inner 50 and outer 51 walls. The inter-compressor duct 53 extends between an outlet of the low pressure compressor 14 and an inlet of the high pressure compressor 15.

As can be seen, there is a mismatch between a radius Rᵢₙₗₑₜ of the core inlet passage at the inlet relative to the radius Rₒᵤₜₗₑₜ at the termination of the core inlet passage 49. The radius of the inlet Rᵢₙₗₑₜ can be determined by measuring the radial distance between a mid-span position (i.e. equidistance between a root and a tip of the aerofoil portion) of the leading edge of the engine section stator 45, and the rotational axis 9 of the engine. Similarly, the Rₒᵤₜₗₑₜ can be determined by measuring the radial distance between a mid-span position (i.e. equidistance between a root and a tip of the aerofoil portion) of the leading edge of the first compressor rotor 44a of the low pressure compressor 14, and the rotational axis 9 of the engine, as shown in figure 2. The difference between these radii ΔR₁ divided by an axial length L₁ of the inlet passage 49 defines a first "duct loading" ΔR₁/L₁. For given inlet and outlet flow conditions, a maximum duct loading is required, otherwise flow separation will occur at the radially inner wall 50, resulting in turbulence at the first rotor stage 44, and low engine performance. Consequently the radius difference ΔR₁ has been found to significantly affect engine length. Engine length in turn is a significant driver of engine weight, since any increase in engine length results in a significant increase in structure, as well as increased shaft lengths. Increased engine length may have other negative consequences, such as difficulty in installing the engine within space constraints on the aircraft, and may even have impacts on other areas, such as wing flutter, due to the change in centre of mass. Consequently, it is desirable to minimise engine length.

The inventors have determined that a particular combination of compressor parameters can result in reduced engine length, while providing a highly efficient, high pressure ratio core.

As noted previously, a low pressure compressor 14 having two compressor stages is chosen. In principle, any number of low and pressure compressor 14 stages could be chosen to provide the required OPR. However, the inventors have found that providing a low pressure compressor having two stages provides distinct advantages.

To achieve the required pressure rise over only two stages, a relatively large diameter first stage 41 is chosen, with relatively little airflow turning per stage. In particular, a first stage rotor 43 having a hub to tip ratio of between 0.5 and 0.7 is chosen, and in the present embodiment, the hub to tip ratio is approximately 0.65. As noted above, this may result in high stage weight and relatively low stage efficiency in view of the high tip speed - however, this has been found to be more than compensated for by the reduced engine length.

As can be seen, the large first stage rotor 44 radius results in a relatively low difference between the inlet radius Rᵢₙₗₑₜ and the outlet radius, Rₒᵤₜₗₑₜ, and so a relatively short inlet passage 49 for a given duct loading. The inventors have found that, for a geared turbofan having a relatively slow turning fan, which develops relatively little pressure at the core inlet, a first duct loading of between 0.3 and 0.6 can be tolerated. A first duct loading between 0.35 and 0.55 is found to provide adequate resistance to flow separate over a wide range of conditions, and may be chosen to decrease the risk of engine compressor surge. For example, in the present embodiment, the first duct loading is approximately 0.5

A relatively high stage count (nine or ten stages) is chosen for the high pressure compressor 15, and a relatively low radius high pressure compressor 15 first stage rotor is chosen. This can be selected in view of the relatively high rotational speed of the high pressure shaft 27.

This high speed, low radius first stage of the high pressure compressor 15, in combination with the relatively large radius of the second stage 42 of the low pressure compressor 14, results in a relatively large second duct loading for the inter-compressor duct 53. This in turn results in a longer inter-compressor duct compared to a three stage low pressure compressor, which partly offsets the advantages of this arrangement. However, in view of the higher pressure, higher velocity air at this point, a higher duct loading can be achieved, and so the increase in overall engine length due to this effect is modest.

As will be understood, the second duct loading can be defined by a second radius change ΔR₂ divided by a second axial length L₂ of the inter-compressor duct. The second radius change ΔR₂ can be defined by a difference between a radius R_{IPC} of the inter-compressor passage 53 measured at a mid-height of the trailing edge the axially rearmost low pressure compressor rotor 43b at an axially forward end of the inter-compressor passage 53, and an outer radius R_{HPC} of the inter-compressor passage measured at a mid-height at a leading edge of a first rotor stage of the high pressure compressor 16. The second duct loading is generally higher than the first duct loading. This is between 0.3 and 0.6, may be between 0.35 and 0.55, and may be approximately 0.5.

To drive the ten stage high pressure compressor 15, a two stage high pressure turbine 17 may be necessary. Again, the number of turbine stages can be determined in a similar manner to the number of compressor stages. Similarly, to drive the low pressure compressor 14 and fan 23, a three or four stage low pressure turbine 19 is provided.

Further advantages are achieved in view of the reduced core inlet passage 49. As can be seen in figure 1, a forward core mounting 54 is provided. The forward core mounting 54 provides support for the core relative to the nacelle 21. The forward core mounting 54 extends between the core outer wall 51 at an axial position corresponding to the inter-compressor duct 53, to a core outer housing 55 at an axial position of the OGV 56, close to a trailing edge 57 of the OGV 56.

In view of the relatively short low pressure compressor 14, and short core inlet 49, the axial distance between the OGV 56 and inter-compressor duct 53 is minimised, thereby reducing the weight of the core mounting 54. Furthermore, the angle relative to the radial plane is reduced, thereby reducing the bending moment applied due to radial forces. Consequently, the weight of the core mounting 54 can be reduced further.

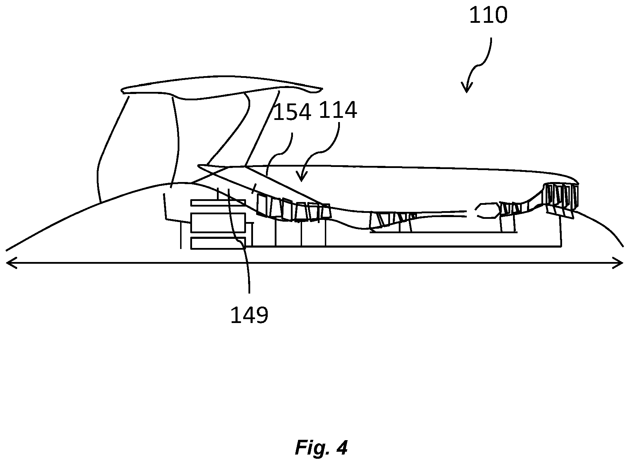

The advantages of the disclosed engine can be seen when comparing the engine of figure 1 to an alternative engine configuration 110 shown in figure 4.

The engine shown in figure 4 is similar to that shown in figures 1 to 3, and only differences will be described. However, the engine 110 is not within the scope of the present disclosure, since a low pressure compressor 114 is provided having three compressor stages.

The overall pressure ratio, work split, gearbox ratio and shaft rotational speed of the engine 110 is however maintained at the same values as the engine 10. Consequently, in this example, the hub to tip ratio of the low pressure compressor 114 is altered, with the low pressure compressor 114 having a reduced diameter. Consequently, a core inlet 149 is lengthened, in view of the high duct loading. As a result, both the low pressure compressor length and the core inlet duct length is increased, resulting in a large increase in overall engine length. Conceptual design and modelling has been undertaken, which has revealed that such a design would be expected to have a length which is approximately 10% longer and heavier than the engine 10 of figure 1. Similarly, both the length and angle relative to the radial direction of the core engine mount 154 is significantly increased, thereby leading to further weight increases.

It will be understood that the invention is not limited to the embodiments above-described and various modifications and improvements can be made without departing from the concepts described herein.

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

## Claims

1. A gas turbine engine (10) comprising a gas turbine engine core comprising high and low pressure compressors (15, 14) and high and low pressure turbines (17, 19), the high pressure compressor (15) and high pressure turbine (17) being coupled by a high pressure shaft (27), and the low pressure compressor (14) and low pressure turbine (19) being coupled by a low pressure shaft (26), the engine further comprising a fan (23) coupled to the low pressure shaft (26) by a reduction gearbox (30), wherein:
the low pressure compressor (14) comprises no more than two compressor stages (41, 42), and the low and high pressure compressor (14, 15) together define a cruise overall core pressure ratio of between 30 and 50, and wherein the engine comprises a core inlet passage (49) extending between a core inlet (52) and an inlet of the low pressure compressor (14), a first radius change ΔR₁ being defined by a difference between a radius (Rᵢₙₗₑₜ) at a mid-height of the leading edge of an engine section stator aerofoil (45) at an axially forward end of the core inlet passage (49), and an outlet radius Rₒᵤₜₗₑₜ of the core inlet passage measured at a mid-height at a leading edge of a first rotor stage (44a) of the low pressure compressor (14), a first duct loading Δ*R₁*/*L₁* being defined by a ratio of the first radius change ΔR₁ to a first axial length L of the inlet duct (49) between the axially forward end and the leading edge of the first stage (44a) of the low pressure compressor (14),
wherein the first duct loading is between 0.35 and 0.55, and wherein the first compressor rotor (44a) of the low pressure compressor (14) defines a hub to tip ratio defined by a radius of a root of a leading edge of the compressor rotor (44a) divided by a radius of a tip at the leading edge of the compressor rotor (44a), wherein the hub to tip ratio is between 0.6 and 0.75; **characterised in that** the engine core comprises an inter-compressor duct (53) extending between an outlet of the low pressure compressor (14) and an inlet of the high pressure compressor (15), the inter-compressor duct (53) defining a second duct loading ΔR₂/L₂ comprising a second radius change ΔR₂ divided by a second axial length L₂ of the inter-compressor duct, wherein the second radius change ΔR₂ can be determined by a difference between a radius R_{IPC} of the inter-compressor passage (53) measured at a mid-height of the trailing edge of an axially rearmost low pressure compressor rotor (43b) at an axially forward end of the inter-compressor passage (53), and a radius R_{HPC} of the inter-compressor passage (53) measured at a mid-height at a leading edge of a first rotor stage of the high pressure compressor (15), wherein the second duct loading is between 0.3 and 0.6.

2. A gas turbine engine according to figure 1, wherein the high pressure compressor (15) defines a cruise overall pressure ratio of between 16:1 and 27:1, and may define a cruise overall pressure ratio of between 17:1 and 20:1.

3. A gas turbine engine according to any of the preceding claims, wherein the high pressure compressor (15) has no fewer than 8 stages and no more than 12 stages, and may comprise 9 or 10 stages.

4. A gas turbine engine according to any of the preceding claims, wherein the low pressure compressor (14) comprises a cruise pressure ratio of between 1.5 and 2.

5. A gas turbine engine according to any of the preceding claims, wherein the the first duct loading is approximately 0.4.

6. A gas turbine engine according to any of the preceding claims, wherein the first compressor rotor (44a) of the low pressure compressor (14) defines a hub to tip ratio o approximately 0.7.

7. A gas turbine engine according to any of the preceding claims, wherein the second duct loading is between 0.35 and 0.55, and may be approximately 0.5.

8. A gas turbine engine according to any of the preceding claims, wherein the engine comprises a forward core mounting member (54) which extends between a radially inner core housing (51) and a radially outer core housing (55).

9. A gas turbine engine according to any of the preceding claims, wherein the engine comprises a plurality of outlet guide vanes (56) located axially rearward of the fan (23), wherein the outlet guide vanes (56) are configured to provide structural support for the engine core relative to a fan housing (21).

10. A gas turbine engine according to claim 8 and claim 9, wherein the forward core mounting member (54) extends between an axial position of the inter-compressor duct (53) and an axial position of a root trailing edge (57) of the outlet guide vanes (56).

11. A method of operating a gas turbine engine in accordance with any of the preceding claims, comprising, at cruise conditions, operating the low and high pressure compressors to provide a pressure ratio between 30:1 and 50:1.

## Patentansprüche

1. Gasturbinentriebwerk (10), umfassend einen Gasturbinentriebwerkskern, der einen Hoch- und einen Niederdruckkompressor (15, 14) und eine Hoch- und eine Niederdruckturbine (17, 19) umfasst, wobei der Hochdruckkompressor (15) und die Hochdruckturbine (17) durch eine Hochdruckwelle (27) gekoppelt sind und der Niederdruckkompressor (14) und die Niederdruckturbine (19) durch eine Niederdruckwelle (26) gekoppelt sind, wobei das Triebwerk ferner einen Fan (23) umfasst, der durch ein Untersetzungsgetriebe (30) an die Niederdruckwelle (26) gekoppelt ist, wobei:
der Niederdruckkompressor (14) nicht mehr als zwei Kompressorstufen (41, 42) umfasst und der Nieder- und der Hochdruckkompressor (14, 15) zusammen ein Cruise-Gesamtkerndruckverhältnis zwischen 30 und 50 definieren und wobei das Triebwerk einen Kerneinlassdurchgang (49) umfasst, der sich zwischen einem Kerneinlass (52) und einem Einlass des Niederdruckkompressors (14) erstreckt, wobei eine erste Radiusänderung ΔR₁ durch eine Differenz zwischen einem Radius (Rᵢₙₗₑₜ) in mittlerer Höhe der Vorderkante eines Triebwerksabschnitts-Statorschaufelblatts (45) an einem axial vorderen Ende des Kerneinlassdurchgangs (49) und einem Auslassradius Rₒᵤₜₗₑₜ des Kerneinlassdurchgangs, gemessen in mittlerer Höhe an einer Vorderkante einer ersten Rotorstufe (44a) des Niederdruckkompressors (14) definiert ist, wobei eine erste Kanalbelastung *ΔR₁*/*L₁* durch ein Verhältnis der ersten Radiusänderung ΔR₁ zu einer ersten axialen Länge L des Einlasskanals (49) zwischen dem axial vorderen Ende und der Vorderkante der ersten Stufe (44a) des Niederdruckkompressors (14) definiert ist, wobei die erste Kanalbelastung zwischen 0,35 und 0,55 liegt und wobei der erste Kompressorrotor (44a) des Niederdruckkompressors (14) ein Naben-Spitzen-Verhältnis definiert, das durch einen Radius eines Fußes einer Vorderkante des Kompressorrotors (44a) geteilt durch einen Radius einer Spitze an der Vorderkante des Kompressorrotors (44a) definiert ist, wobei das Naben-Spitzen-Verhältnis zwischen 0,6 und 0,75 liegt; **dadurch gekennzeichnet, dass** der Triebwerkskern einen Zwischenkompressorkanal (53) umfasst, der sich zwischen einem Auslass des Niederdruckkompressors (14) und einem Einlass des Hochdruckkompressors (15) erstreckt,
wobei der Zwischenkompressorkanal (53) eine zweite Kanalbelastung ΔR₂/L₂ definiert, die eine zweite Radiusänderung ΔR₂ geteilt durch eine zweite axiale Länge L₂ des Zwischenkompressorkanals umfasst, wobei die zweite Radiusänderung ΔR₂ durch eine Differenz zwischen einem Radius R_{IPC} des Zwischenkompressordurchgangs (53), gemessen in mittlerer Höhe der Hinterkante eines axial hintersten Niederdruckkompressorrotors (43b) an einem axial vorderen Ende des Zwischenkompressordurchgangs (53), und einem Radius R_{HPC} des Zwischenkompressordurchgangs (53), gemessen in mittlerer Höhe an einer Vorderkante einer ersten Rotorstufe des Hochdruckkompressors (15), bestimmt werden kann, wobei die zweite Kanalbelastung zwischen 0,3 und 0,6 liegt.

2. Gasturbinentriebwerk nach Figur 1, wobei der Hochdruckkompressor (15) ein Cruise-Gesamtdruckverhältnis zwischen 16:1 und 27:1 definiert und ein Cruise-Gesamtdruckverhältnis zwischen 17:1 und 20:1 definieren kann.

3. Gasturbinentriebwerk nach einem der vorhergehenden Ansprüche, wobei der Hochdruckkompressor (15) nicht weniger als 8 Stufen und nicht mehr als 12 Stufen aufweist und 9 oder 10 Stufen umfassen kann.

4. Gasturbinentriebwerk nach einem der vorhergehenden Ansprüche, wobei der Niederdruckkompressor (14) ein Cruise-Druckverhältnis zwischen 1,5 und 2 umfasst.

5. Gasturbinentriebwerk nach einem der vorhergehenden Ansprüche, wobei die erste Kanalbelastung etwa 0,4 beträgt.

6. Gasturbinentriebwerk nach einem der vorhergehenden Ansprüche, wobei der erste Kompressorrotor (44a) des Niederdruckkompressors (14) ein Nabe-Spitze-Verhältnis von etwa 0,7 definiert.

7. Gasturbinentriebwerk nach einem der vorhergehenden Ansprüche, wobei die zweite Kanalbelastung zwischen 0,35 und 0,55 liegt und etwa 0,5 betragen kann.

8. Gasturbinentriebwerk nach einem der vorhergehenden Ansprüche, wobei das Triebwerk ein vorderes Kernmontageelement (54) umfasst, das sich zwischen einem radial inneren Kerngehäuse (51) und einem radial äußeren Kerngehäuse (55) erstreckt.

9. Gasturbinentriebwerk nach einem der vorhergehenden Ansprüche, wobei das Triebwerk eine Vielzahl von Auslassleitschaufeln (56) umfasst, die sich axial rückwärtig von dem Fan (23) befinden, wobei die Auslassleitschaufeln (56) dazu konfiguriert sind, eine strukturelle Unterstützung für den Triebwerkskern relativ zu einem Fan-Gehäuse (21) bereitzustellen.

10. Gasturbinentriebwerk nach Anspruch 8 und Anspruch 9, wobei sich das vordere Kernmontageelement (54) zwischen einer axialen Position des Zwischenkompressorkanals (53) und einer axialen Position einer Fußhinterkante (57) der Auslassleitschaufeln (56) erstreckt.

11. Verfahren zum Betreiben eines Gasturbinentriebwerks nach einem der vorhergehenden Ansprüche, umfassend, bei Cruise-Bedingungen, Betreiben des Nieder- und des Hochdruckkompressors, um ein Druckverhältnis zwischen 30:1 und 50:1 bereitzustellen.

## Revendications

1. Moteur à turbine à gaz (10) comprenant un noyau de moteur à turbine à gaz comprenant des compresseurs haute et basse pression (15, 14) et des turbines haute et basse pression (17, 19), le compresseur haute pression (15) et la turbine haute pression (17) étant couplés par un arbre haute pression (27), et le compresseur basse pression (14) et la turbine basse pression (19) étant couplés par un arbre basse pression (26), le moteur comprenant en outre une soufflante (23) couplée à l'arbre basse pression (26) par un réducteur (30), dans lequel :
le compresseur basse pression (14) ne comprend pas plus de deux étages de compresseur (41, 42), et les compresseurs basse et haute pression (14, 15) définissent ensemble un rapport de pression de noyau globale de croisière compris entre 30 et 50, et dans lequel le moteur comprend un passage d'entrée de noyau (49) s'étendant entre une entrée de noyau (52) et une entrée du compresseur basse pression (14), un premier changement de rayon ΔR₁ étant défini par une différence entre un rayon (R_{entrée}) à mi-hauteur du bord d'attaque d'un profil aérodynamique de stator de section de moteur (45) à une extrémité axialement avant du passage d'entrée de noyau (49) et un rayon de sortie Rₛₒᵣₜᵢₑ du passage d'entrée de noyau mesuré à mi-hauteur à un bord d'attaque d'un premier étage de rotor (44a) du compresseur basse pression (14), une première charge de conduit *ΔR₁*/*L₁* étant définie par un rapport du premier changement de rayon ΔR₁ à une première longueur axiale L du conduit d'entrée (49) entre l'extrémité axialement avant et le bord d'attaque du premier étage (44a) du compresseur basse pression (14),
dans lequel la première charge de conduit est comprise entre 0,35 et 0,55, et dans lequel le premier rotor de compresseur (44a) du compresseur basse pression (14) définit un rapport moyeu/pointe défini par un rayon d'une emplanture d'un bord d'attaque du rotor de compresseur (44a) divisé par un rayon d'une pointe au niveau du bord d'attaque du rotor de compresseur (44a), dans lequel le rapport moyeu/pointe est compris entre 0,6 et 0,75 ; **caractérisé en ce que** le noyau de moteur comprend un conduit inter-compresseur (53) s'étendant entre une sortie du compresseur basse pression (14) et une entrée du compresseur haute pression (15),
le conduit inter-compresseur (53) définissant une seconde charge de conduit ΔR₂/L₂ comprenant un second changement de rayon ΔR₂ divisé par une seconde longueur axiale L₂ du conduit inter-compresseur, dans lequel le second changement de rayon ΔR₂ peut être déterminé par une différence entre un rayon R_{IPC} du passage inter-compresseur (53) mesuré à mi-hauteur du bord de fuite d'un rotor de compresseur basse pression axialement le plus en arrière (43b) à une extrémité axialement avant du passage inter-compresseur (53) et un rayon R_{HPC} du passage inter-compresseur (53) mesuré à mi-hauteur à un bord d'attaque d'un premier étage de rotor du compresseur haute pression (15), dans lequel la seconde charge de conduit est comprise entre 0,3 et 0,6.

2. Moteur à turbine à gaz selon la figure 1, dans lequel le compresseur haute pression (15) définit un rapport de pression globale de croisière compris entre 16:1 et 27:1, et peut définir un rapport de pression globale de croisière compris entre 17:1 et 20:1.

3. Moteur à turbine à gaz selon l'une quelconque des revendications précédentes, dans lequel le compresseur haute pression (15) comporte pas moins de 8 étages et pas plus de 12 étages, et peut comprendre 9 ou 10 étages.

4. Moteur à turbine à gaz selon l'une quelconque des revendications précédentes, dans lequel le compresseur basse pression (14) comprend un rapport de pression de croisière compris entre 1,5 et 2.

5. Moteur à turbine à gaz selon l'une quelconque des revendications précédentes, dans lequel la première charge de conduit est d'environ 0,4.

6. Moteur à turbine à gaz selon l'une quelconque des revendications précédentes, dans lequel le premier rotor de compresseur (44a) du compresseur basse pression (14) définit un rapport moyeu/pointe d'environ 0,7.

7. Moteur à turbine à gaz selon l'une quelconque des revendications précédentes, dans lequel la seconde charge de conduit est comprise entre 0,35 et 0,55, et peut être d'environ 0,5.

8. Moteur à turbine à gaz selon l'une quelconque des revendications précédentes, ledit moteur comprenant un élément de montage de noyau avant (54) qui s'étend entre un boîtier de noyau radialement interne (51) et un boîtier de noyau radialement externe (55).

9. Moteur à turbine à gaz selon l'une quelconque des revendications précédentes, ledit moteur comprenant une pluralité d'aubes directrices de sortie (56) situées axialement à l'arrière de la soufflante (23), lesdites aubes directrices de sortie (56) étant configurées pour fournir un support structurel au noyau de moteur par rapport à un carter de soufflante (21).

10. Moteur à turbine à gaz selon la revendication 8 et la revendication 9, dans lequel l'élément de montage de noyau avant (54) s'étend entre une position axiale du conduit inter-compresseur (53) et une position axiale d'un bord de fuite d'emplanture (57) des aubes directrices de sortie (56).

11. Procédé de fonctionnement d'un moteur à turbine à gaz selon l'une quelconque des revendications précédentes, comprenant, dans des conditions de croisière, le fonctionnement des compresseurs basse et haute pression pour fournir un rapport de pression compris entre 30:1 et 50:1.
